# EUROPEAN PATENT APPLICATION

(11) **EP 4 579 302 A1**
(43) Date of publication of application: **02.07.2025**
(21) Application number: 24020152.5
(22) Date of filing: 15.05.2024
(51) Int. Cl.: G02B 6/42

(54) **BALE-CLASP COVER MECHANISM FOR A SUBSCRIBER CONNECTOR PLUGGABLE OPTICAL TRANSCEIVER**

(30) Priority: 28.12.2023 PT 2023119179
(71) Applicant: Altice Labs, S.A., 3810-106 Aveiro (PT)
(72) Inventor: Rodrigues, Cláudio Emanuel, 3810-106 Aveiro (PT); Correia Matos, Daniel Filipe, 3810-106 Aveiro (PT); Amaral Henriques, Luis Miguel, 3810-106 Aveiro (PT); Morais, Rui Jorge, 3810-106 Aveiro (PT)
(74) Representative: Arnaut, José Luis

(57) **Abstract**

The present invention relates to a bale-clasp cover system for a subscriber connector (SC) pluggable optical transceiver (10) comprising a bale-clasp handle (11), a cover (12), an U-shaped arm assembly (13) connected to said handle (11) and adapted to pivotally release the transceiver (10) by activating release arm (15), and a protruding mark (17) in the optical transceiver (10) top surface aligned with the SC connection. Said bale-clasp cover mechanism is adapted to equip a SC pluggable optical transceiver (10) and to provide a quadruple mechanism of preventing light leakage, preventing the ingress of dust or other contaminants into the SC plug socket (18), allow the removal of the SFP optical transceiver (10) from the housing (14) and indicate the correct position for connecting the SC optical connector (16).

## Description

### FIELD OF THE INVENTION

The present invention is enclosed in the area of pluggable optical transceivers, particularly in the field of locking and securing mechanisms, namely in the form of bale-clasp, and protection mechanisms for a subscriber connector (SC) .

### PRIOR ART

A small form-factor pluggable (SFP) is a compact, hot-pluggable transceiver that connects a fiber optic cable to a network device, such as a switch, a router, a server, an optical line terminal or an optical network unit.

The SFP is a compact network interface module that can support different communication standards and media types. SFP transceivers have evolved and adapted to meet the increasing demand for higher bandwidth and faster data transfer rates in optical networks. SFPs exist in different types, namely as SFP, SFP+, SFP28, SFP56 or SFP112, and differ based on the supported data transfer rate.

A SFP is based on the multi-source agreement small form-factor (MSA SFF) specifications, which define the physical dimensions, electrical characteristics and optical interfaces of the transceiver. The MSA SFF specifications are developed and maintained by a group of industry vendors, to ensure interoperability and compatibility among different products. Some of the MSA SFF specifications that are relevant to SFPs are the SFF-8472, SFF-8431, SFF-8432, SFF-TA-1031, SFF-8402, and INF-8074i.

The main differences among SFP, SFP+, SFP28, SFP56, and SFP112 are the supported data rates, which range from 1 to 100 Gbps.

The physical dimensions of the SFP transceiver are defined by the MSA specification. According to the MSA, the SFP transceiver has the following dimensions:
- Length: 56.5 mm (2.22 in)
- Width: 13.4 mm (0.53 in)
- Height: 8.5 mm (0.33 in)

A SFP transceiver comprises a standard or duplex lucent connector (LC) or standard SC for the optical interface, and a 20-pin electrical connector for the host interface. The SFP transceiver is adapted to be hot-pluggable and interchangeable with other SFP modules that comply with the same specifications.

An SFP with a SC connector is a term that refers to the use of SFP transceivers with SC fiber optic connectors. A SC is a type of fiber optic connector that features a push and pull mechanism combined with a locking tab.

The SFP optical connectors provide the interface for high-speed data transmission over fiber-optic cables.

### PROBLEM TO BE SOLVED

SFP optical connectors are vulnerable to dust contamination, which can degrade the signal quality and cause errors or failures. Dust particles can block or scatter the light beam, resulting in attenuation, reflection, or interference. Dust causes signal degradation, errors, or failures by blocking or scattering the light beam that travels through the connector. Therefore, it is important to protect the SFP optical connectors from dust exposure.

To prevent dust from affecting the performance of SFP optical connectors, it is important to:
- Always use dust caps to cover the SFP optical connector when they are not in use. Dust caps can protect the connectors from dust, moisture, and physical damage.
- Clean the SFP optical connector regularly with appropriate tools and methods.
- Inspect the SFP optical connector before inserting the optical fiber connector. Check the connector end face for any dust, scratches, or defects.
- Avoid touching the SFP optical connector end face with your fingers or any other objects. This can introduce dust, oil, or static electricity that can harm the connector.

The optical connectors of the optical transceivers should further be covered with a dust plug when not in use, so the dust will not be blown up by the system fan - depending on how dusty the environment is, there is a high risk of ramming the dirt deep into the transceiver optical connector. If any dust settles inside the pluggable transceiver connector, it might be pushed to the end face when an optical connector is plugged.

### SUMMARY OF THE INVENTION

The present invention relates to a cover mechanism for a SFP bale-clasp transceiver adapted to protect a SC pluggable optical transceiver. The cover mechanism is operatively coupled with the bale-clasp mechanism, protecting the optical transceiver SC optical connector from contamination, securing and detaching the optical transceiver module from the housing assembly and to protect the human retina from invisible laser radiation that may be emitted from the optical transceiver.

The preferred embodiment of the invention comprises a bale-clasp cover mechanism for a SC pluggable optical transceiver comprising:
- a bale-clasp handle adapted to rotate around the proximal inferior edge of the optical transceiver;
- a surface cover;
- a spring
wherein said cover is further adapted to rotate around the superior edge of the handle and comprising a spring configured to tension the cover at a 90 degrees angle against the opposite edge of handle to protect the SC socket of the SC optical transceiver.

Advantageously, the handle in the bale-clasp cover mechanism is adapted rotate 90 degrees around the inferior axis of the optical transceiver's proximal edge, pivotally rotating the U-shaped assembly arm which is configured to activate the release arm and consequently releasing the optical transceiver.

Yet in a particular embodiment of the invention, the bale-clasp cover mechanism further comprises a protrusion in its superior surface of the handle, said protrusions largest direction being aligned with the SC connection direction.

Due to the set of technical features that characterize the bale-clasp mechanism with an operatively coupled cover, it is possible to protect the optical transceiver SC connector from contamination even when there is no optical fiber cable connected and provide a mechanism to insert and remove the SFP.

### DESCRIPTION OF FIGURES

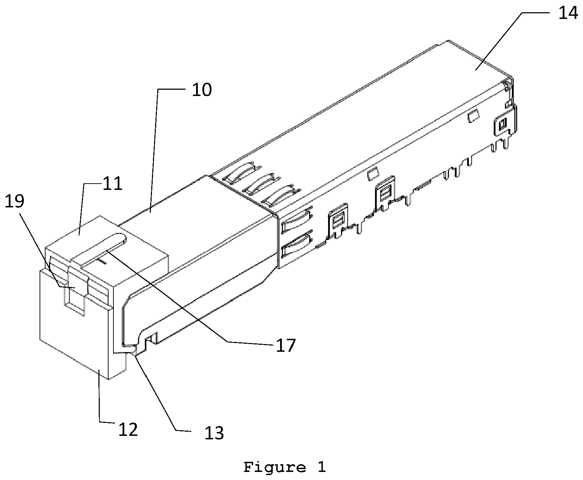

Figure 1 shows a perspective view of an embodiment of the bale-clasp cover mechanism for a SC pluggable optical transceiver in locked or closed position, mounted in a conventional housing assembly. Said handle is attached to the optical transceiver adapted to rotate around the inferior proximal axis of the optical transceiver.

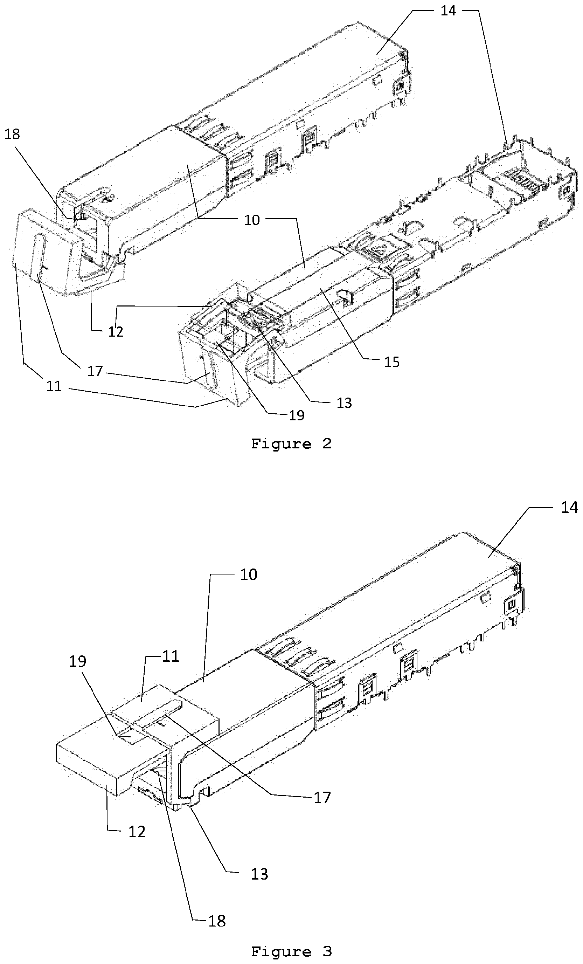

Figure 2 depicts two perspective views of yet the same preferred embodiment of the bale-clasp cover mechanism for an optical transceiver in release or unlocked position, mounted in a conventional housing assembly. The bale-clasp handle is rotated around the inferior proximal axis of the optical transceiver pivotally activating the release arm by means of its arm assembly.
Figure 13 shows a perspective view of an embodiment of the bale-clasp cover mechanism for a SC pluggable optical transceiver in release or opened position, mounted in a conventional housing assembly.

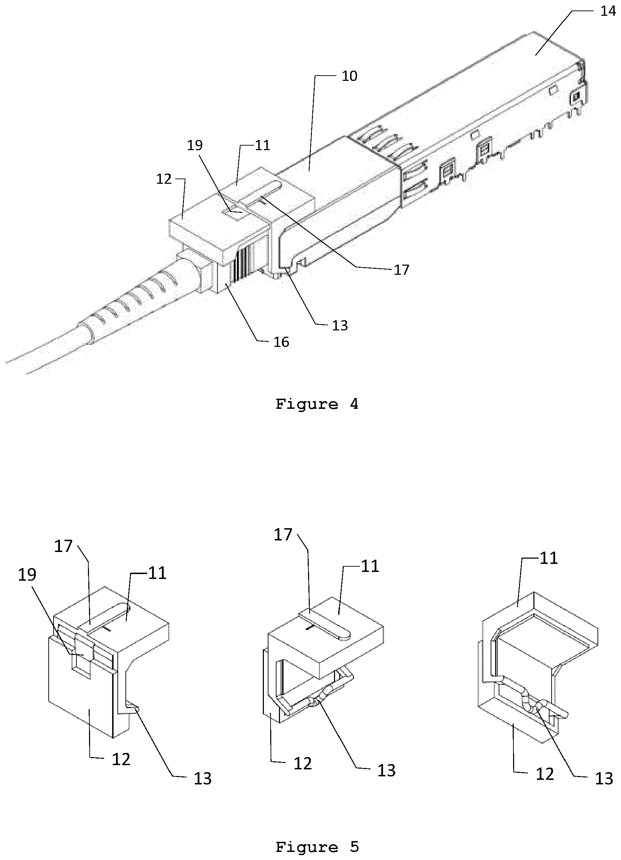

Figure 4 is a perspective view an embodiment of the transceiver module with the bale-clasp cover mechanism in release or opened position and a SC connector fiber connected to the transceiver SC socket. The bale-clasp cover is rotated by 90 degrees around the proximal superior edge of the optical transceiver in a way that the SC is able to connect to the SC socket in the optical transceiver. Said cover is in opened position.
Figure 5 depicts different views of the bale-clasp cover mechanism. The superior surface of the cover is adapted to fit the superior surface of the optical transceiver and comprises a protrusion whose longest axis is aligned with the SC connection direction. The bale-clasp cover mechanism further comprises a pivoting cover surface adapted to independently rotate around the superior axis of the bale-clasp handle by means of a spring adapted to act in the closing direction.
   10 - transceiver module
   11 - bale-clasp handle
   12 - bale-clasp cover
   13 - arm assembly in U shape
   14 - housing assembly
   15 - release arm
   16 - SC
   17 - protrusion
   18 - SC plug socket
   19 - closing spring

### DETAILED DESCRIPTION

The following description is presented to enable any person skilled in the art to build and use the invention. Various modifications to the disclosed embodiments will be readily apparent to those skilled in the art. The general principles defined herein may be applied to other embodiments and applications without departing from the scope of the present invention. Thus, the present invention is not intended to be limited to the embodiments shown.

The present invention relates to a bale-clasp cover mechanism adapted for a fiber optic transceivers comprising a single SC, as illustrated in Figures 1 to 5. The transceiver module (10) is adapted to be removably attached to the housing assembly (14). Housing assembly (14) is to be interpreted as a conventional SFP optical transceiver housing. Said bale-clasp cover mechanism is adapted to lock the transceiver module (10) to the housing assembly (14) when in closed or locked position and release the transceiver module (10) from the housing assembly (14) when in release or opened position.

The term "bale-clasp" is to be interpreted as a type of closure mechanism that combines the features of both a bale and a clasp adapted to provide a closure so an hanging cable that needs to be attached or hung securely. Conventional latch/release mechanisms for optical modules are configured to work on a lever principal. Specifically, the tapered end or projection is on one end of the lever, and the other end of the lever is connected to the tab, actuator button or bale-clasp. When releasing or unlocking the module, the tapered end or projection is disengaged from the socket by lifting the tab, the actuator or the bale-clasp to move the tapered end or projection down and into the module housing. The module housing may then be removed from the socket by applying a force along the module housing thereby pulling the module housing out of the socket. However, removing the module housing when the lever is not in the proper position can damage the tapered end or projection and/or the socket or cage.

According to the preferred embodiment of the invention, the bale-clasp cover mechanism is to be used on an SC optical transceiver module (10) that is removably connected to housing (14). The bale-clasp cover mechanism comprises a bale or handle (11), a cover surface (12) and an arm assembly protruding in U-shape (13), as shown in Figure 5. The bale or handle (11) includes a conveniently marked protrusion (17), provided with its longest axis as the SC fiber connector alignment to provide means for the user to easily align the insertion of a SC (16) connection. The cover surface (12) is operatively mounted in handle (11) and pivotally switches between an opened position and a closed position, with regard to the bale-clasp mechanism.

When the transceiver module (10) is removably attached to the socket opening in housing assembly (14), bale-clasp mechanism (11) is in locked or closed position (Figure 1). In said closed position, it is not possible to connect the a SC (16) or access to SC plug socket (18) in any other way, by means of cover surface (12) acting as a protecting or blocking mechanism. Conversely, when the bale-clasp handle (11) is it its closed position and the cover (12) is rotated 90 degrees in the upwards direction (Figure 3), i.e., said opened or release position, the user can advantageously access the SC plug socket (18) and establish a SC connection (16), as shown in Figure 4.

In case the optical module (10) is in the socket position of housing (14) and handle (11) is in its closed or locked position (Figures 1, 3 or 4), the optical transceiver is locked to the housing assembly (14) by means of the bale-clasp mechanism.

Conversely, when the bale-clasp mechanism cover (12) is 90 degrees rotated in the downwards direction around the inferior edge of the optical transceiver (10) (Figure 2) with regard to the bale-clasp handle (11), the protruding arm assembly (13) is simultaneously rotated 90 degrees in the same direction and acts on the release arm (15), pivotally pushing it towards the housing assembly (14), thus releasing the transceiver module (10) from the housing assembly (14).

The bale-clasp cover mechanism is further provided with a spring (19) adaptably mounted to act on the surface of cover (12). Said spring (19) is mounted between the bale-clasp handle (11) and cover (12), as shown in Figure 5. Advantageously, the closing spring (19) is in tension with the cover (12) and continuously pushes said cover (12) to a closing position (Figures 3 and 4). The closing spring (19) needs to be acted for the insertion of an SC (16) on the SC plug socket (18).

It should be noted that the bale-clasp handle (11) is not able to complete the necessary rotation to release the transceiver module (10) unless any installed SC connector (16) has been removed from the SC plug socket (18) of the transceiver module (10). This feature provides a failsafe method for assuring that the transceiver module (10) cannot be removed from the housing (14) while the SC connector (16) is in position, thereby avoiding inadvertent data transmission interruption.

The exemplary embodiment of the bale-clasp cover mechanism and its U-shaped arm assembly (13) are further adapted to prevent light leakage, prevent the dust or other contaminants insertion into the SC plug socket (18) and to detachably remove the SFP optical transceiver (10) from the housing assembly (14).

Said cover (12), as described according to the exemplary embodiments of the invention, is used to protect against the leakage of emitted light from a light-emitting diode (LED), a laser diode (LD), or another light-emitting device.

As will be clear to one skilled in the art, the present invention should not be limited to the embodiments described herein, and several changes are possible that remain within the scope of the present invention.

Of course, the preferred embodiments shown above are combinable, in the different possible forms, being herein avoided the repetition of all such combinations.

## Claims

1. A bale-clasp cover mechanism for a SC pluggable optical transceiver (10) comprising:
- a bale-clasp handle (11) adapted to rotate around the proximal inferior edge of the optical transceiver (10);
- a surface cover (12);
- a spring (19)
wherein, said cover (12) is further adapted to rotate around the superior edge of the handle (12) and spring (19) is configured to tension the cover (12) at a 90 degrees angle against the opposite edge of handle (11) to protect the SC socket of the optical transceiver (10).

2. A bale-clasp cover mechanism for a SC pluggable optical transceiver (10) according to claim 1 wherein said handle (11) further comprises an U-shaped assembly arm (13) operatively mounted in the handle (11) configured to synergistically rotate downwards activating release arm (15) to release the optical transceiver (11).

3. A bale-clasp cover mechanism for a SC pluggable optical transceiver (10) according to claims 1 or 2 wherein said handle (11) comprises a protrusion (17) in its top surface, whose longest axis is aligned with the SC connection direction.
